# EUROPÄISCHE PATENTSCHRIFT

(11) **EP 0 699 153 B1**
(45) Veröffentlichungstag und Bekanntmachung des Hinweises auf die Patenterteilung: **29.12.1997**
(21) Anmeldenummer: 93919195.3
(22) Anmeldetag: 26.08.1993
(51) Int. Cl.: B62L 1/14

(54) **FAHRRAD-FELGENBREMSE**
BICYCLE RIM BRAKE
FREIN SUR JANTE POUR BICYCLETTES

(30) Priorität: 26.08.1992 DE 4228320
(43) Veröffentlichungstag der Anmeldung: 06.03.1996
(73) Patentinhaber: VIB LINE ESTABLISHMENT, 9495 Triesen (LI)
(72) Erfinder: GERMANN, Andreas, CH-8280 Kreuzlingen (CH)
(74) Vertreter: Tetzner, Michael, Dipl.-Ing.
(86) Internationale Anmeldenummer: EP9302314
(87) Internationale Veröffentlichungsnummer: WO9404410

(56) Entgegenhaltungen:
- DE-A- 4 034 271

## Beschreibung

Die Erfindung betrifft eine Fahrrad-Felgenbremse, enthaltend zwei mit Bremsbacken versehene und mit einer Betätigungseinrichtung verbundene Schwenkhebel, zwei zur Lagerung der Schwenkhebel dienende Bremssockel sowie zwei Gummifederelemente zur Rückstellung der Schwenkhebel nach einem Bremsvorgang.

Bei bekannten Cantilever-Felgenbremsen erfolgt die Rückstellung der Schwenkhebel über eine an der Schwenklagerstelle vorgesehene Spiralfeder. Felgenbremsen dieser Art sind mit verschiedenen Nachteilen behaftet. Die Herstellung, Montage, Wartung und Nachjustierung sind aufwendig. Die Lagerung der Schwenkhebel ist ferner verschmutzungsgefährdet. Durch die Anordnung der Spiralfeder ergibt sich weiterhin ein unerwünscht großer Abstand des Schwenkhebels von der Ansatzstelle des ihn tragenden Bremssockels. Felgenbremsen dieser Art zeigen schließlich eine unerwünschte Neigung zu Schwingungen.

Durch die DE-A-40 34 271 ist ferner eine Cantilever-Felgenbremse bekannt, bei der ein im Drehpunkt des Schwenkhebels auf dem Bremssockel angeordnetes Gummifederelement einerseits die Lagerung des Schwenkhebels übernimmt und andererseits die Rückstellung und Vorspannung des Schwenkhebels in seine Ausgangsstellung bewirkt. Nachteilig ist bei dieser bekannten Felgenbremse vor allem der verhältnismäßig große Verschleiß, dem das Gummifederelement aufgrund der hohen und ständig wechselnden Lagerbeanspruchungen ausgesetzt ist. Die Gummifederelemente dieser bekannten Felgenbremse müssen daher schon nach verhältnismäßig kurzer Betriebszeit ausgewechselt werden, was einen beträchtlichen Wartungsaufwand verursacht.

Der Erfindung liegt die Aufgabe zugrunde, eine Fahrrad-Felgenbremse der im Oberbegriff des Anspruches 1 vorausgesetzten Gattung so auszubilden, daß sie weitgehend wartungsfrei ist, kostensparend hergestellt und montiert werden kann und Vibrationen wirksam unterdrückt.

Diese Aufgabe wird erfindungsgemäß durch folgende Merkmale gelöst:
a) zwischen jedem Bremssockel und dem zugehörigen Schwenkhebel ist eine zweiteilige Lagerbuchse vorgesehen, wobei der Schwenkhebel in radialer Richtung mittels innenzylindrischer Lagerflächen auf außenzylindrischen Lagerflächen beider Lagerbuchsenteile gelagert ist;
b) jeder Schwenkhebel und die beiden Lagerbuchsenteile sind ferner mit zueinander komplementären Anlaufflächen versehen, die so angeordnet sind, daß in der Ruhelage jedes Schwenkhebels ein Spiel zwischen den Anlaufflächen des Schwenkhebels und den komplementären Anlaufflächen der beiden Lagerbuchsenteile besteht, daß jedoch bei Einwirkung einer durch den Bremsvorgang bedingten axialen Kraft auf den Schwenkhebel eine Anlauffläche des Schwenkhebels zur Anlage an der komplementären Anlauffläche des einen Lagerbuchsenteiles kommt.

Zweckmäßige Ausgestaltungen der Erfindung sind Gegenstand der Unteransprüche.

Im Gegensatz zu der oben erwähnten, aus der DE-A-40 34 271 bekannten Felgenbremse dienen bei der erfindungsgemäßen Lösung die Gummifederelemente nicht zur Lagerung der Schwenkhebel. Die Schwenkhebel sind vielmehr unmittelbar auf Lagerbuchsen gelagert, die zwischen dem Bremssockel und dem zugehörigen Schwenkhebel angeordnet sind. Auf diese Weise unterliegen die Gummifederelemente nicht den hohen und ständig wechselnden Lagerbeanspruchungen und sind demgemäß nur einem geringen Verschleiß ausgesetzt, was eine weitgehende Wartungsfreiheit der erfindungsgemäßen Felgenbremse gewährleistet.

Bei der erfindungsgemäßen Felgenbremse sind die Schwenkhebel in ihrer Ruhelage lediglich in radialer Richtung auf den zugehörigen Lagerbuchsen gelagert. In axialer Richtung beteht dagegen in der Ruhelage ein Spiel zwischen den Anlaufflächen der Schwenkhebel und den komplementären Anlaufflächen der Lagerbuchsen. Erst wenn beim Bremsvorgang eine axiale Kraft auf die Schwenkhebel ausgeübt wird, kommen die Schwenkhebel mit einer Anlauffläche zur Anlage an der komplementären Anlauffläche der zugehörigen Lagerbuchse. Auf diese Weise ist die Felgenbremse einerseits bei der Betätigung sehr leichtgängig; andererseits werden Schwingungen bzw. Vibrationen beim Bremsvorgang wirksam unterdrückt.

Ein Ausführungsbeispiel der Erfindung ist in der Zeichnung schematisch veranschaulicht. Es zeigen:
- Fig.1: eine schematische Stirnansicht einer Felgenbremse,
- Fig.2: eine perspektivische Darstellung eines Schwenkhebels und der zu seiner Lagerung bestimmten Teile,
- Fig.3: einen Halbschnitt durch die Schwenklagerstelle im zusammengebauten Zustand.

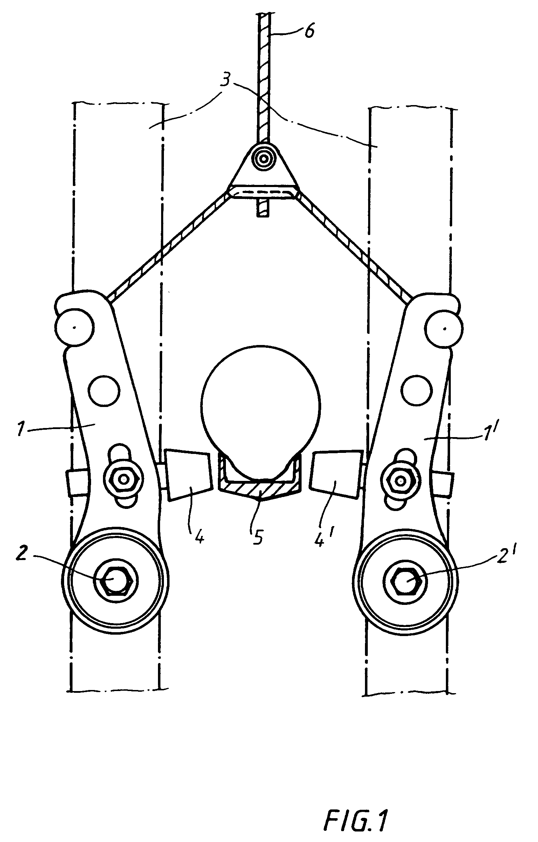

Die in Fig.1 dargestellte Fahrrad-Felgenbremse enthält zwei Schwenkhebel 1, 1', die an einer Schwenklagerstelle 2, 2' an der Vorderradgabel 3 des Fahrrads schwenkbar gelagert sind. Die Schwenkhebel 1, 1' tragen Bremsbacken 4, 4', die beim Bremsvorgang zur Anlage an einer Felge 5 kommen. Zur Betätigung der Schwenkhebel 1, 1' dient eine durch einen Seilzug 6 gebildete Betätigungseinrichtung.

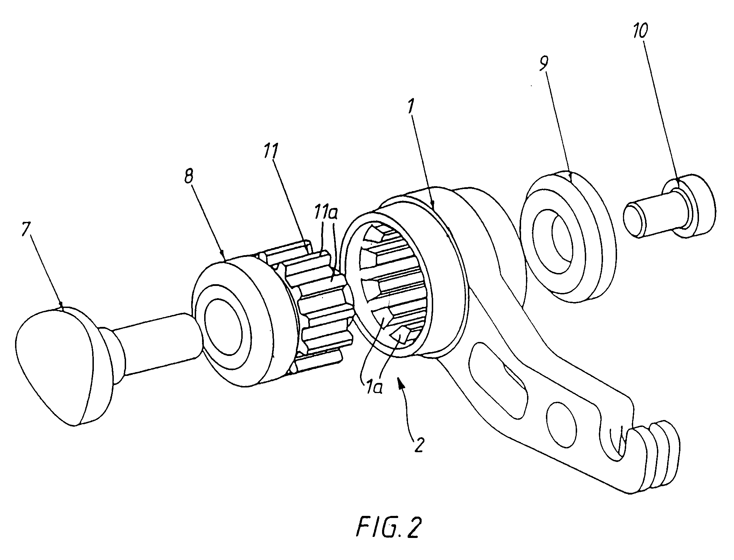

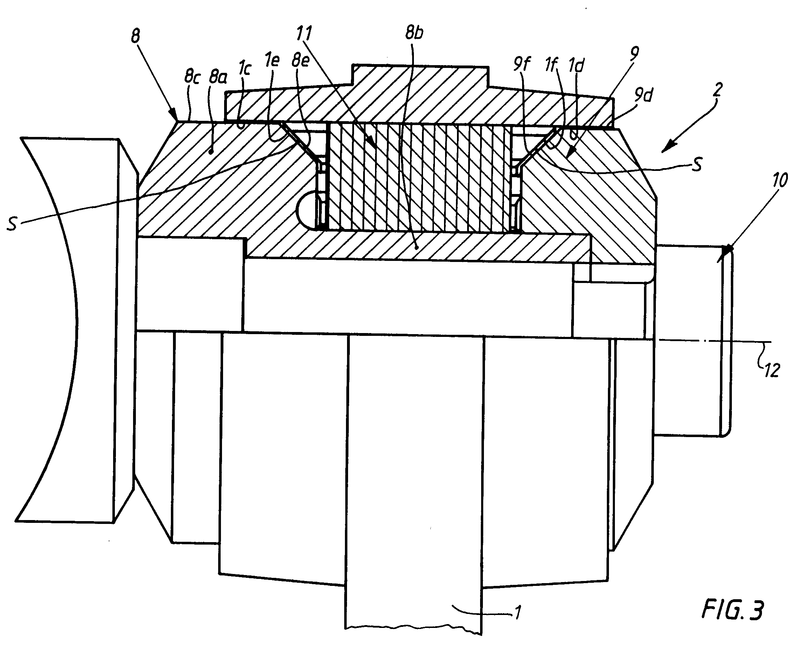

Fig.2 zeigt die Einzelteile der Schwenklagerstelle 2 im auseinandergebauten Zustand (die Schwenklagerstelle 2' ist in entsprechender Weise ausgebildet). Fig.3 veranschaulicht die Schwenklagerstelle 2 im montierten Zustand.

Zur Lagerung des Schwenkhebels 1 dient ein Bremssockel 7, der am Fahrrad (d.h. für die Vorderradbremse an der Vorderradgabel 3 bzw. für die Hinterradbremse am Rahmen) befestigt wird.

Zwischen dem Bremssockel 7 und dem Schwenkhebel 1 ist eine zweiteilige, vorzugsweise metallische Lagerbuchse vorgesehen, die aus den beiden Lagerbuchsenteilen 8 und 9 besteht. Hierbei setzt sich der Lagerbuchsenteil 8 aus einem Flansch 8a und einer hiermit einstückig ausgebildeten, auf dem Bremssockel 7 angeordneten Hülse 8b zusammen, wahrend der Lagerbuchsenteil 9 als ein auf das Ende der Hülse 8b aufsteckbarer Flansch ausgebildet ist.

Die beiden Lagerbuchsenteile 8 und 9 sind durch eine in eine Gewindebohrung des Bremssockels 7 eingeschraubte Spannschraube 10 zusammengespannt.

In einer zwischen den Flanschen der beiden Lagerbuchsenteile 8, 9 vorhandenen ringförmigen Ausnehmung ist ein Gummifederelement 11 angeordnet, das ringförmig ausgebildet ist und eine Außenverzahnung 11a aufweist, die in Eingriff mit einer komplementär gestalteten Innenverzahnung 1a des Schwenkhebels 1 steht.

Das Gummifederelement 11 ist dabei reibschlüssig auf die Hülse 8b des Lagerbuchsenteiles 8 aufgeschoben. Es ist zwar grundsätzlich auch möglich, eine feste Verbindung zwischen dem Gummifederelement 11 und der Hülse 8b des Lagerbuchsenteiles 8 vorzusehen, doch haben Untersuchungen gezeigt, daß ein reibschlüssiges Aufschieben des Gummifederelementes 11 auf die Hülse 8b genügt, um im vollständig montierten Zustand der Schwenklagerstelle bei einer Schwenkbewegung des Schwenkhebels eine feste Haftung des Gummifederelementes 11 auf der Hülse 8b des Lagerbuchsenteiles 8 zu gewährleisten.

Der Schwenkhebel 1 ist mit einer innenzylindrischen Lagerfläche 1c auf einer außenzylindrischen Lagerfläche 8c des Lagerbuchsenteiles 8 und mit einer innenzylindrischen Lagerfläche 1d auf einer außenzylindrischen Lagerfläche 9d des Lagerbuchsenteiles 9 gelagert.

Der Schwenkhebel 1 ist ferner mit an die genannten innenzylindrischen Lagerflächen 1c, 1d in axialer Richtung anschließenden, kegelstumpfförmigen Anlaufflächen 1e, 1f versehen, denen komplementäre Anlaufflächen 8e, 9f der Lagerbuchsenteile 8, 9 gegenüberliegen. In der Ruhelage des Schwenkhebels 1 (die in Fig.3 angenommen ist) besteht dabei ein Spiel S zwischen diesen Anlaufflächen 1e, 8e bzw. 1f, 9f.

Beim Bremsvorgang wirkt nun auf den Schwenkhebel 1 eine in Richtung der Achse 12 wirkende Mitnahmekraft, die von der Felge 5 über den Bremsbacken 4 auf den Schwenkhebel 1 wirkt und ihn - bei Betrachtung der Fig.3 nach links bzw. rechts, d.h. in Fahrtrichtung nach vorn, zu ziehen sucht. Dabei kommt der Schwenkhebel 1 mit einer seiner beiden Anlaufflächen 1e bzw. 1f zur Anlage an der komplementären Anlauffläche 8e bzw. 9f des zugehörigen Lagerbuchsenteiles 8 bzw. 9. Durch diese während des Bremsvorganges zwischen dem Schwenkhebel 1 und einem der beiden Lagerbuchsenteile 8 bzw. 9 vorhandene spielfreie Paarung werden störende Schwingungen und Vibrationen wirksam unterdrückt.

Das Gummifederelement 11 erfährt bei der Auslenkung des Schwenkhebels 1 aus seiner Ruhelage eine Torsionsbeanspruchung und wird elastisch verformt. Beim Lösen der Bremse wird der Schwenkhebel 1 durch die Rückstellkraft des Gummifederelementes 11 in seine Ruhelage zurückgeführt, wobei gleichzeitig das Spiel S zwischen den beim Bremsvorgang zur gegenseitigen Anlage gekommenen Anlaufflächen 1e, 8e bzw. 1f, 9f wieder hergestellt wird.

Da das Spiel S erst gegen Ende des Anziehens der Bremse aufgehoben und bereits bei Beginn des Lösens der Bremse wieder hergestellt wird, ergibt sich für das Anziehen und Lösen der Bremse ein kleiner Reibungswiderstand in der Lagerstelle des Schwenkhebels; die Bremse ist also sehr leichtgängig. Auf der anderen Seite ist während des eigentlichen Bremsvorganges durch die axiale Abstützung des Schwenkhebels 1 an einem der beiden Lagerbuchsenteile 8 bzw. 9 (über die genannten Anlaufflächen 1e, 8e bzw. 1f, 9f) eine außerordentlich wirksame Schwingungsunterdrückung gewährleistet.

## Patentansprüche

1. Fahrrad-Felgenbremse enthaltend zwei mit Bremsbacken (4) versehene und mit einer Betätigungseinrichtung verbundene Schwenkhebel (1, 1'), zwei zur Lagerung der Schwenkhebel dienende Bremssockel (7) sowie zwei Gummifederelemente (11) zur Rückstellung der Schwenkhebel nach einem Bremsvorgang,
gekennzeichnet durch folgende Merkmale:
a) zwischen jedem Bremssockel (7) und dem zugehörigen Schwenkhebel (1) ist eine zweiteilige Lagerbuchse (8, 9) vorgesehen, wobei der Schwenkhebel in radialer Richtung mittels innenzylindrischer Lagerflächen (1c, 1d) auf außenzylindrischen Lagerflächen (8c, 9d) beider Lagerbuchsenteile (8, 9,) gelagert ist;
b) jeder Schwenkhebel (1) und die beiden Lagerbuchsenteile (8, 9) sind ferner mit zueinander komplementären Anlaufflächen (1e, 1f bzw. 8e, 9f) versehen, die so angeordnet sind, daß in der Ruhelage jedes Schwenkhebels ein Spiel (S) zwischen den Anlaufflächen des Schwenkhebels und den komplementären Anlaufflächen der beiden Lagerbuchsenteile besteht, daß jedoch bei Einwirkung einer durch den Bremsvorgang bedingten axialen Kraft auf den Schwenkhebel eine Anlauffläche (1e bzw. 1f) des Schwenkhebels (1) zur Anlage an der komplementären Anlauffläche (8e bzw. 9f) des einen Lagerbuchsenteiles (8 bzw. 9) kommt.

2. Felgenbremse nach Anspruch 1, dadurch gekennzeichnet, daß der eine Lagerbuchsenteil (8) aus einem Flansch (8a) und einer hiermit einstückig ausgebildeten, auf dem Bremssockel (7) angeordneten Hülse (8b) besteht, während der andere Lagerbuchsenteil (9) als ein auf das Ende der Hülse (8b) aufsteckbarer Flansch ausgebildet ist, wobei die beiden Lagerbuchsenteile (8, 9) durch eine in den Bremssockel (7) eingeschraubte Spannschraube (10) in axialer Richtung zusammengespannt sind und das Gummifederelement (11) in einer zwischen den Flanschen der beiden Lagerbuchsenteile (8, 9) vorhandenen ringförmigen Ausnehmung angeordnet ist.

3. Felgenbremse nach einem der Ansprüche 1 und 2, dadurch gekennzeichnet, daß der Schwenkhebel (1) mit an die innenzylindrischen Lagerflächen (1c, 1d) in axialer Richtung anschließenden kegelstumpfförmigen Anlaufflächen (1e, 1f) und die Flansche der beiden Lagerbuchsenteile (8, 9) mit an die außenzylindrischen Lagerflächen (8c, 9d) in axialer Richtung anschließenden kegelstumpfförmigen Anlaufflächen (8e, 9f) versehen sind.

4. Felgenbremse nach Anspruch 1, dadurch gekennzeichnet, daß das ringförmig ausgebildete Gummifederelement (11) reibschlüssig auf die Hülse (8b) des einen Lagerbauteiles (8) aufgeschoben ist und eine Außenverzahnung (11a) aufweist, die in Eingriff mit einer komplementär gestalteten Innenverzahnung (1a) des Schwenkhebels (1) steht.

## Claims

1. Bicycle rim brake comprising two pivot levers (1, 1') which are provided with brake shoes (4) and connected to an actuating arrangement, two brake supports (7) which serve for mounting of the pivot levers, and two rubber spring elements (11) for restoring the pivot levers after a braking operation, characterised by the following features:
a) between each brake support (7) and the appertaining pivot lever (1) there is provided a two-part bearing bushing (8, 9), wherein the pivot lever is mounted in the radial direction by means of internally cylindrical bearing surfaces (1c, 1d) on externally cylindrical bearing surfaces (8c, 9d) of both bearing bushing parts (8, 9);
b) each pivot lever (1) end the two bearing bushing parts (8, 9) are also provided with lead-in surfaces (1e, 1f or 8e, 8f respectively) which are complementary to one another and are disposed so that in the neutral position of each pivot lever there is a clearance (S) between the lead-in surfaces of the pivot lever and the complementary lead-in surfaces of the two bearing bushing parts but when an axial force caused by the braking operation acts on the pivot lever one lead-in surface (1e or 1f) of the pivot lever (1) comes to butt against the complementary lead-in surface (8a or 9f) of one bearing pushing part (8 or 9) respectively.

2. Rim brake as claimed in Claim 1, characterised in that one bearing bushing part (8) consists of a flange (8a) and a sleeve (8b) which is constructed integrally therewith and disposed on the brake support (7), whilst the other bearing bushing part (9) is constructed as a flange which can be placed onto the end of the sleeve (8b), wherein the two bearing bushing parts (8, 9) are clamped together in the axial direction by a tightening screw (10) screwed into the brake support (7) and the rubber spring element (11) is disposed in an annular recess between the flanges of the two bearing bushing parts (8, 9).

3. Rim brake as claimed in one of Claims 1 and 2, characterised in that the pivot lever (1) is provided with lead-in surfaces (1e, 1f) in the shape of truncated cones which adjoin the internally cylindrical bearing surfaces (1c, 1d) in the axial direction and the flanges of the two bearing bushing parts (8, 9) are provided with lead-in surfaces (8e, 9f) in the shape of truncated cones which adjoin the externally cylindrical bearing surfaces (8c, 9d) in the axial direction.

4. Rim brake as claimed in Claim 1, characterised in that the rubber spring element (11) of annular construction is pushed frictionally onto the sleeve (8b) of one bearing component and has an outer toothing (11a) which is in engagement with a complementary inner toothing (1a) of the pivot lever (1).

## Revendications

1. Frein sur jante pour bicyclette contenant deux leviers basculants (1, 1') munis de mâchoires de frein (4) et reliés à un dispositif d'actionnement, deux embases de frein (7) servant pour le logement des leviers basculants ainsi que deux éléments de ressort en caoutchouc (11) pour le rappel des leviers basculants après l'opération de freinage,
caractérisé par les particularités suivantes :
(a) entre chaque embase de frein (7) et le levier basculant correspondant (1) est prévu un coussinet en deux parties (8, 9), le levier basculant étant logé en direction radiale au moyen de faces d'arrêt cylindriques internes (1c, 1d) sur les faces d'arrêt cylindriques externes (8c, 9d) des deux parties de coussinet (8, 9);
(b) chaque levier basculant (1) et les deux parties de coussinet (8, 9) sont de plus munis de faces d'arrêt complémentaires entre elles (1e, 1f ou 8e, 9f) qui sont disposées de telle sorte que dans la position de repos de chaque levier basculant, existe un jeu (S) entre les faces d'arrêt du levier basculant et les faces d'arrêt complémentaires des deux parties de coussinet, en ce que toutefois lors de l'action d'une force axiale imputable à l'opération de freinage sur le levier basculant, une face d'arrêt (1e ou 1f) du levier basculant (1) vient en appui sur la surface d'arrêt complémentaire (8e ou 9f) d'une partie de coussinet (8 ou 9).

2. Frein sur jante selon la revendication 1, caractérisé en ce qu'une des parties de coussinet (8) consiste en une bride (8a) et une douille (8b) disposées sur l'embase de frein (7) et formées d'une seule pièce, tandis que l'autre partie de coussinet (9) est formée en tant que bride enfichable sur l'extrémité de la douille (8b), les deux parties de coussinet (8, 9) étant tendues ensemble par une vis de tension (10) vissée dans l'embase de frein (7) dans la direction axiale et l'élément de ressort en caoutchouc (11) étant disposé dans un évidement circulaire prévu entre les brides des deux parties de coussinet (8, 9).

3. Frein sur jante selon l'une des revendications 1 et 2, caractérisé en ce que le levier basculant (1) est muni de surfaces d'arrêt (1e, 1f) de forme tronconique contiguës aux surfaces d'arrêt cylindriques internes (1c, 1d) dans la direction axiale et les brides des deux parties de coussinet (8, 9) sont munies de surfaces d'arrêt (8e, 9f) tronconiques contiguës aux surfaces de palier cylindriques externes (8c, 9d).

4. Frein sur jante selon la revendication 1, caractérisé en ce que l'élément de ressort en caoutchouc (11) de forme cylindrique est introduit par friction sur la douille (8b) d'une partie de coussinet (8) et présente une denture extérieure (11a) qui vient en prise avec une denture intérieure de forme complémentaire (1a) du levier basculant (1).
